# EUROPEAN PATENT SPECIFICATION

(11) **EP 4 196 346 B1**
(45) Date of publication and mention of the grant of the patent: **30.09.2026**
(21) Application number: 21758123.0
(22) Date of filing: 12.08.2021
(51) Int. Cl.: B32B 27/08, B32B 27/32

(54) **MULTILAYER FILM WITH LOW SEAL INITIATION TEMPERATURE**
MEHRSCHICHTFOLIE MIT NIEDRIGER SIEGELINITIIERUNGSTEMPERATUR
FILM MULTICOUCHE À FAIBLE TEMPÉRATURE D'INITIATION DE SCELLEMENT

(30) Priority: 12.08.2020 EP 20190767
(43) Date of publication of application: 21.06.2023
(73) Proprietor: Borealis GmbH, 1020 Vienna (AT)
(72) Inventor: ABUL KASHEM, Mottakin, 40878 Ratingen (DE)
(74) Representative: Dehns
(86) International application number: PCT/EP2021/072472
(87) International publication number: WO 2022/034168

(56) References cited:
- EP-A1- 2 944 465
- EP-A1- 2 944 466
- EP-B1- 2 944 465
- EP-B1- 2 944 466
- US-A1- 2016 271 917
- US-A1- 2018 370 202

## Description

This invention relates to packaging films with beneficial heat sealing and hot tack properties. In particular, the invention relates to a multilayer packaging film comprising multimodal LLDPE terpolymers with improved properties.

### Background of invention

Polymer films are widely used in packaging. These films must obviously protect the contents of the package from damage and the environment. In addition, it is vital that the packages can be formed on a fast packaging machine.

Polyethylene films are widely used in packaging and are often laminated with a relatively high heat resistant substrate like PET film to prepare a flexible package. Such laminates cannot be readily recycled due to presence of two chemically different materials.

To resolve that problem a machine direction oriented polyethylene (MDO PE) or biaxially oriented polyethylene (BOPE) film can be used to replace the PET film. The resulting laminate comprises polyethylene only and is hence fully mechanically recycled.

Once the material to be packaged has been placed within the packaging material, the package is conventionally heat-sealed. It is important that the heat resistant layer (e.g. MDO PE or BOPE) does not shrink or becomes soft during heat sealing process. This is a particular issue using vertical or horizontal form fill and seal (FFS) operations. Because of the chemical nature of polyethylene, the possibility to increase heat resistance properties of MDO PE or BOPE film is limited. Since the vicat softening temperature of commonly used HDPE in MDO PE and BOPE films lies around 125°C or less, a preferable sealing temperature would be below 60°C or at least below 65°C to ensure enough temperature gap (for example > 60°C) between heat resistant MDO PE or BOPE film layer and sealing PE layer of a laminate for faster packaging.

Another important property of the laminate is hot tack strength at low sealing temperature. The higher the strength, the heavier the content of the package and the faster the packing speed can be in vertical FFS (VFFS) technology. Therefore, a polyethylene lamination film with a seal initiation temperature (SIT) of below 65°C with high hot tack strength at low sealing temperature is the route to solve this problem.

WO2012/0611681 claims to achieve a seal strength of 10N/25 mm at a sealing temperature of > 68°C. However, the claimed film is not 100% polyethylene as the film contains a propylene copolymer.

US7842770 discloses blown film composition with high hot tack, where the sealing layer composition contains ethylene-octene multiple block copolymer exhibiting peak hot tack strength of 5N/25mm at a temperature above or equal to 105°C.

EP0575465 discloses a polyethylene film structure with a sealant layer containing propylene-ethylene elastomers and ethylene-octene plastomers that achieves a seal strength of 10N/25mm at sealing temperature of equal or higher than 110°C.

US2018370202A1 discloses one example of a multi-layered polyethylene film comprising an outer layer, a core layer, and a seal layer, in that order, wherein the seal layer comprises: 80 wt.% of a t multimodal linear low density polyethylene terpolymer and 20 wt% of a plastomer having a density of 882 kg/m³, relative to the total weight of the seal layer, wherein the core layer comprises a second multimodal polyethylene terpolymer.

The present inventor has found that a coextruded multilayer polyethylene film comprising certain carefully defined components provides a film with a low seal initiation temperature (SIT) but with high hot tack strength. In particular, the film of the invention can provide sealability at a very low temperature of 60°C or below, with maximum hot tack strength of > 9N/25mm at sealing temperature of 66°C or above. The sealing time is short and the resulting films have good stiffness and good puncture resistance and impact properties. The improved sealing behaviour is achieved without a reduction in haze or gloss.

### Summary of Invention

Viewed from one aspect the invention provides multi-layered polyethylene film comprising at least an outer layer, a core layer, and
a seal layer, in that order, wherein the seal layer comprises:
   i) at least 30.0 wt.% of a first multimodal linear low density polyethylene terpolymer, relative to the total weight of the seal layer; and
   ii) at least 10.0 wt% of a first plastomer, relative to the total weight of the seal layer, having a density of 910 kg/m³ or less (ISO1183);
wherein the core layer comprises:
   a) at least 8.0 wt% of second plastomer, relative to the total weight of the core layer, having a density of 910 kg/m³ or less (ISO 1183), or
   b) at least 8.0 wt% of a multimodal linear low density polyethylene (LLDPE) binary copolymer relative to the total weight of the core layer;
      and
   c) a second multimodal polyethylene terpolymer.

In particular, the invention provides a multi-layered polyethylene film comprising at least an outer layer, a core layer, and a seal layer, in that order, wherein the seal layer comprises:
i) at least 30.0 wt% of a first multimodal linear low density polyethylene terpolymer relative to the total weight of the seal layer; and
ii) at least 10.0 wt% of a first plastomer, relative to the total weight of the seal layer, having a density of 910 kg/m³ or less;

wherein the core layer comprises:
   a) at least 8.0 wt% of second plastomer, relative to the total weight of the core layer, having a density of 910 kg/m³ or less, or
   b) at least 8.0 wt% of a multimodal linear low density polyethylene (LLDPE) binary copolymer relative to the total weight of the core layer;
      and
   c) a second multimodal polyethylene terpolymer; and
wherein the outer layer comprises:
   I) a low density polyethylene;
   II) a multimodal linear low density polyethylene (LLDPE) binary copolymer; and
   III) a first multimodal linear low density polyethylene terpolymer or a second multimodal polyethylene terpolymer.

Viewed from another aspect the invention provides a process for the preparation of a multi-layered polyethylene film as hereinbefore defined comprising the steps of:
i) forming a first polymer composition comprising at least 30.0 wt% of a first multimodal linear low density polyethylene terpolymer; and
ii) at least 10.0 wt% of a first plastomer having a density of 910 kg/m³ or less;

forming a second polymer composition comprising:
   a) at least 8.0 wt% of second plastomer having a density of 910 kg/m³ or less; or
   b) at least 8.0 wt% of a multimodal linear low density polyethylene (LLDPE) binary copolymer;
      and
   c) a second multimodal polyethylene terpolymer;
forming a third polymer composition; and
(co)extruding the first, second and third polymer compositions to form said seal layer, core layer and outer layer respectively.

### Detailed description of Invention

The film of the invention is a multi-layered polyethylene film comprising at least an outer layer, a core layer, and a seal layer, in that order. The film of the invention has a broad sealing window allowing sealing at varying temperature.

Moreover, in a preferred embodiment, by blending a first multimodal LLDPE terpolymer with narrow molecular weight distribution with a low density plastomer in the seal layer, a very low seal initiation temperature is achieved.

It is preferred if all the polymer components of the films of the invention are polyethylene polymers. The term polyethylene means that the polymer comprises more than 50.0 wt% ethylene monomers, preferably more than 60.0 wt% ethylene monomers.

### Seal Layer

The seal layer comprises at least 30.0 wt% of a first multimodal linear low density polyethylene terpolymer; and at least 10.0 wt% of a first plastomer having a density of 910 kg/m³ or less. The wt% values for these components are relative to the total weight of the seal layer.

Preferably, the first multimodal LLDPE terpolymer of the seal layer is present in an amount of at least 35.0 wt%, such as at least 40.0 wt%, preferably at least 50.0 wt%, such as at least 60.0 wt%, relative to the total weight of the seal layer.

Alternatively viewed, there is 30.0 to 80.0 wt% of the first multimodal LLDPE terpolymer, such as 30.0 to 70.0 wt% in the seal layer. In some embodiments there may be 50.0 to 80.0 wt% of the first multimodal LLDPE terpolymer in the seal layer.

Preferably there is 15.0 to 45.0 wt%, such as 20.0 to 40.0 wt%, especially 25.0 to 40.0 wt% of the first plastomer in the seal layer.

The first multimodal LLDPE terpolymer of use in the seal layer may have a density of 910 to 930 kg/m³, preferably 915 to 925 kg/m³.

The first multimodal LLDPE terpolymer may have an MFR₂ of 0.1 to 20 g/10min, preferably 0.35 to 5.0 g/10min, more preferably 0.4 to 3.0 g/10min.

The first multimodal linear low density polyethylene terpolymer may have an Mw/Mn of 2.0 to 7.0, such as 2.0 to 6.0, ideally less than 5.0.

The first multimodal LLDPE terpolymer of use in the seal layer typically comprises a lower molecular weight (LMW) component and a higher molecular weight (HMW) component.

The first multimodal LLDPE terpolymer of use in the seal layer must comprise two comonomers. These may be present in the HMW component, i.e. it is a terpolymer component or the comonomers may be spread across both components. Furthermore, in case that the HMW component is a terpolymer, the lower molecular weight (LMW) component can be an ethylene homopolymer. In this case, the multimodal LLDPE is still a multimodal LLDPE terpolymer.

The first multimodal LLDPE terpolymer of the invention may therefore be one in which the HMW component comprises repeat units deriving from ethylene and at least two other C₄₋₁₂ alpha olefin monomers such as 1-butene and one C₆₋₁₂ alpha olefin monomer. Ethylene preferably forms the majority of the LMW or HMW component.

Alternatively, both LMW and HMW components are copolymers of ethylene and at least one C₄₋₁₂ alpha olefin monomer such that the overall first multimodal LLDPE terpolymer comprises at least two C₄₋₁₂ alpha olefin monomers.

The overall comonomer content in the first multimodal LLDPE terpolymer may be for example 0.5 to 8.0 % by mol, preferably 0.7 to 6.5 % by mol, more preferably 1.0 to 4.5 % by mol and most preferably 1.5 to 4.0 % by mol.

1-Butene may be present in an amount of 0.1 to 2.5 % by mol, such as 0.22 to 2.0 % by mol, more preferably 0.25 to 1.5 % by mol and most preferably 0.25 to 1.0 % by mol.

The C6 to C12 alpha olefin may be present in an amount of 0.3 to 5.5 % by mol, preferably 0.4 to 4.5 % by mol, more preferably 0.7 to 4.0 % by mol and most preferably 1.0 to 3.5 % by mol, especially 1.5 to 3.0 % by mol.

A preferred C6 to C12 alpha olefin is 1-hexene.

In a preferred embodiment, the first multimodal LLDPE terpolymer may comprise two ethylene copolymers such that there are at least two C4-12 alpha olefin comonomers present, e.g. such as an ethylene butene copolymer (e.g. as the LMW component) and an ethylene hexene copolymer (e.g. as the HMW component). It would also be possible to combine an ethylene copolymer component and an ethylene terpolymer component such that there are at least two C4-12 alpha olefin comonomers present, e.g. an ethylene butene copolymer (e.g. as the LMW component) and an ethylene butene hexene terpolymer (e.g. as the HMW component).

A suitable first multimodal LLDPE terpolymer preferably has:
(i) as a lower molecular weight (LMW) component an ethylene polymer component having an MFR₂ of 1.0 to 10.0 g/10 min (according to ISO 1133 at 190°C under 2.16 kg load) and
(ii) as a higher molecular weight (HMW) component an ethylene polymer component having an MFR₂ of 0.2 to 2.5 g/10 min (according to ISO 1133 at 190°C under 2.16 kg load),
and whereby the density of ethylene polymer component (i) is higher than the density of the ethylene polymer component (ii); the density of the ethylene polymer component (i) being in the range of 930 to 950 kg/m³.

The HMW component of the first multimodal LLDPE terpolymer may for example have preferably an MFR₂ of less than 1.0 g/10 min, preferably less than 0.9 g/10 min, especially less than 0.8 g/10min. It may have a density of less than 915 kg/m³, e.g. less than 910 kg/m³, preferably less than 905 kg/m³.

The first multimodal LLDPE terpolymer may be formed using single site catalysis or a Ziegler Natta catalyst. Both these types of catalyst are well known in the art.

In one embodiment, the first multimodal LLDPE terpolymer may comprise an ethylene homopolymer and an ethylene butene hexene copolymer component and is, ideally made by single site catalysis and is therefore a metallocene catalyzed linear low density polyethylene (mLLDPE). In a further embodiment, the first multimodal LLDPE terpolymer may comprise an ethylene butene copolymer and an ethylene hexene copolymer component and is, ideally made by single site catalysis and is therefore a metallocene catalyzed linear low density polyethylene (mLLDPE).

Metallocene catalyzed linear low density polyethylenes (mLLDPE) are known in the art and as such not subject of the invention. Reference is made in this regard for Example to EP 3 257 895 A1, example IE1 of EP 3 257 895 A1 or WO2020/136166, e.g. the 2nd second bimodal terpolymer or WO 2019/081611, Example 3.

An example of such a metallocene catalyzed linear low density polyethylene (mLLDPE) is Anteo^{™} FK1820 or FK1828, which are bimodal ethylene/1-butene/1-hexene terpolymers with a density of 918 kg/m³ and an MFR₂ of 1.5 g/10min commercially available from Borouge.

The multimodal (e.g. bimodal) polymers can in general be made by mechanical blending two or more, separately prepared polymer components or, preferably, by in-situ blending in a multistage polymerization process during the preparation process of the polymer components. Both mechanical and in-situ blending are well-known in the field.

Accordingly, preferred first multimodal LLDPE terpolymers, are prepared by in-situ blending in a multistage, i.e. two or more stage, polymerization or by the use of two or more different polymerization catalysts, including multi- or dual site catalysts, in a one stage polymerization.

Preferably the first multimodal LLDPE terpolymer, is produced in at least two-stage polymerization using the same catalyst, e.g. a single site or Ziegler-Natta catalyst. Thus, for example two slurry reactors or two gas phase reactors, or any combinations thereof, in any order can be employed. Preferably however, the multimodal polymer, e.g. LLDPE, is made using a slurry polymerization in a loop reactor followed by a gas phase polymerization in a gas phase reactor.

A loop reactor - gas phase reactor system is marketed by Borealis as a BORSTAR reactor system. Any multimodal polymer, e.g. LLDPE, present is thus preferably formed in a two stage process comprising a first slurry loop polymerization followed by gas phase polymerization.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerization may also be carried out in bulk where the reaction medium is formed from the monomer being polymerized.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene and optional comonomer is polymerized in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerization it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated. The use of these equations to calculate polymer properties in multimodal polymers is common place. The polymers of use on the invention are however commercially available materials.

### First Plastomer

The seal layer further comprises a first plastomer. Preferably there is at least 10.0 wt% of the first plastomer, such as at least 15.0 wt% of the first plastomer. Preferably there is 15.0 to 45.0 wt%, such as 20.0 to 40.0 wt%, especially 25.0 to 40.0 wt% of the first plastomer in the seal layer.

The first plastomer may be a copolymer of ethylene and 1-butene, 1-hexene or 1-octene in which the ethylene forms the major component. Preferred first plastomers are copolymers of ethylene and 1-butene or ethylene and 1-octene, more preferably ethylene and 1-octene. The content of comonomer, such as 1-octene, in the plastomer may be 5.0 to 40.0 wt%, such as 15.0 to 30.0 wt%.

In an embodiment, the first plastomer of the seal layer may have a density of between 870 and 895 kg/m³, preferably between 875 and 890 kg/m³, further preferred 875 and 885 kg/m³.

In an embodiment, the first plastomer of the seal layer may have an MFR₂ of between 0.1 and 5.0 g/10min, preferably 0.5 and 3.0 g/10min, further preferred 0.6 and 2.0 g/10min.

The molecular mass distribution Mw/Mn of suitable ethylene based plastomers is most often below 4, such as 3.8 or below, but is at least 1.7. It is preferably between 3.5 and 1.8.

Suitable ethylene based first plastomers can be any copolymer of ethylene and propylene or ethylene and 1-butene, 1-hexene or 1-octene having the above defined properties, which are commercial available, i.a. from Borealis under the tradename Queo, from DOW Chemical Corp (USA) under the tradename Engage or Affinity, or from Mitsui Chemicals under the tradename Tafmer.

Alternately these ethylene based plastomers can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons.

Preferably, these ethylene based plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerization process is a high temperature solution polymerization process, using a polymerization temperature of higher than 100°C. Preferably the polymerization temperature is at least 110°, more preferably at least 150°C. The polymerization temperature can be up to 250°C.

The pressure in such a solution polymerization process is preferably in a range of 10 to 100 bar, preferably 15 to 100 bar and more preferably 20 to 100 bar.

The liquid hydrocarbon solvent used is preferably a C5-12-hydrocarbon which may be unsubstituted or substituted by C1-4 alkyl group such as pentane, methyl pentane, hexane, heptane, octane, cyclohexane, methylcyclohexane and hydrogenated naphtha. More preferably unsubstituted C6-10-hydrocarbon solvents are used.

A known solution technology suitable for the process according to the invention is the Borceed^{™} technology.

Plastomers of the invention are ideally formed using metallocene type catalysts. Plastomers of use in the invention are commercially available and can be bought from polymer suppliers and aid the sealing of the claimed films.

### Additional Polymer Components of the seal layer

In one embodiment, the seal layer further comprises a multimodal LLDPE binary copolymer as defined in detail below for the core layer.

If present, the multimodal LLDPE binary copolymer may form 20.0 to 40.0 wt% of the seal layer. The combined amounts of a first multimodal LLDPE terpolymer and multimodal LLDPE binary copolymer in the seal layer may be 60.0 to 80.0 wt%.

### Core layer

The multilayer film of the invention comprises a core layer. The core layer is sandwiched between the outer layer and the seal layer. The core layer is preferably in direct contact with the outer layer. The core layer is preferably in direct contact with the seal layer. The core layer is preferably in direct contact with the seal layer and outer layer. Ideally, therefore the film of the invention comprises 3 layers only.

The core layer comprises:
a) at least 8.0 wt% of a second plastomer having a density of 910 kg/m³ or less, or
b) at least 8.0 wt% of a multimodal linear low density polyethylene (LLDPE) binary copolymer;
   and
c) a second multimodal polyethylene terpolymer.

The wt% of these components is relative to the total weight of the core layer.

### Second Plastomer of the core layer

In one embodiment, the core layer comprises a second plastomer. The second plastomer of the core layer can be the same or different from the first plastomer of the seal layer. The definitions provided above for the first plastomer in the seal layer also apply to the plastomer of the core layer. The same preferences also apply. It is preferred if the first plastomer of the seal layer is the same as the second plastomer of the core layer.

The core layer may comprise at least 8.0 wt% of the second plastomer, such as at least 10.0 wt%, preferably 10.0 to 40.0 wt%, such as 12.0 to 40.0 wt%, based on the weight of the core layer.

### Multimodal linear low density polyethylene (LLDPE) binary copolymer

In a second embodiment, the core layer comprises at least one multimodal LLDPE binary copolymer. This is ideally a copolymer of ethylene with one C4-12 alpha olefin (a binary copolymer). It preferably has a density of 910 to 940 kg/m^{3,} preferably 915 to 935 kg/m³.

It preferably has an MFR₂ of 0.1 to 5.0 g/10min.

The polymer is preferably a multimodal LLDPE binary copolymer with one C4-12 alpha olefin which comprises a lower molecular weight (LMW) component and a higher molecular weight (HMW) component.

In one embodiment the multimodal LLDPE binary copolymer may be a Ziegler Natta catalyzed LLDPE copolymer. In another embodiment, the multimodal LLDPE binary copolymer may comprise two ethylene butene copolymers.

In another embodiment of the present invention, in the multimodal LLDPE binary copolymer of use in the core layer, the HMW component as well as the lower molecular weight (LMW) component are ethylene copolymers of ethylene with one C4-12 alpha olefin, preferably copolymers of ethylene with 1-butene.

Ziegler Natta catalyzed linear low density polyethylene (znLLDPE) are also known in the art and as such not subject of the invention. They are for example produced using a ZN catalysts as disclosed in EP 688794, EP 835887, WO 2004/000933, WO 2004/000902 or WO 2004/106393.

An example for a Ziegler Natta catalyzed multimodal LLDPE binary copolymer (znLLDPE) is FB2230, which is a bimodal ethylene/1-butene copolymer with a density of 923 kg/m³ and an MFR₂ of 0.2 g/10min commercially available from Borealis.

The amount of comonomers present in the multimodal LLDPE binary copolymer is preferably 0.5 to 12.0 mol%, e.g. 2.0 to 10.0 mol%, especially 4.0 to 8.0 mol%.

The multimodal LLDPE binary copolymer suitable for use in the core layer can comprise a lower molecular weight fraction being a polyethylene homopolymer and a higher molecular weight fraction being a copolymer of ethylene and one alpha olefin comonomer having 4 - 10 carbon atoms. It is preferred however if the HMW component as well as the lower molecular weight (LMW) component are ethylene copolymers of ethylene with one C4-10 alpha olefin, preferably copolymers of ethylene with 1-butene

The core layer may comprise at least 8.0 wt% of the multimodal linear low density polyethylene (LLDPE) binary copolymer such as at least 10.0 wt%, preferably 10.0 to 40.0 wt%, such as 20.0 to 40.0 wt%, of the multimodal linear low density polyethylene (LLDPE) binary copolymer.

### Second multimodal terpolymer

The core layer further comprises a second multimodal terpolymer. This is preferably a terpolymer of ethylene with at least two C4-12 alpha olefins.

The second multimodal terpolymer preferably forms at least 50.0 wt%, preferably at least 60.0 wt%, such as at least 65.0 wt%, especially at least 70.0 wt%, relative to the total weight of the core layer. In some embodiments, it forms 65.0 to 90.0 wt% of the core layer, such as 70 to 90 wt%.

The second multimodal ethylene terpolymer may comprise at least two C4-12 alpha-olefin comonomers. Ideally, the multimodal ethylene terpolymer contains 2 comonomers only. The comonomers are especially selected from 1-butene, 1-hexene or 1-octene. The amount of comonomers present in the multimodal ethylene terpolymer is preferably 0.5 to 12.0 mol%, e.g. 2.0 to 10.0 mol%, especially 4.0 to 8.0 mol%.

The second multimodal ethylene terpolymer suitable for use in films of the present invention preferably comprises a lower molecular weight fraction being a polyethylene homopolymer and a higher molecular weight fraction being a terpolymer of ethylene and at least two alpha olefin comonomers having 4 - 10 carbon atoms.

Thus, the second multimodal ethylene terpolymer suitable for use in the core layer of the films of the present invention can preferably comprise:
(b-1) a lower molecular weight homopolymer of ethylene; and
(b-2) a higher molecular weight terpolymer of ethylene, 1-butene and a C6-C10-alpha-olefin.

Preferably, the second comonomer of the higher molecular weight component is a C6-C10-alpha-olefin selected from the group of 1-hexene, 4-methyl-1-pentene, 1-octene and 1-decene, especially 1-hexene or 1-octene.

The second multimodal ethylene terpolymer preferably has a density of 920 to 940 kg/m³. Ideally, the multimodal terpolymer has a density of 930 to 940 kg/m³.

The second multimodal ethylene terpolymer preferably has an MFR₂ of 0.1 to 3.0 g/10min, preferably 0.3 to 2.5 g/10min.

The second multimodal polyethylene terpolymer of the core layer may have an Mw/Mn of 10 to 30, preferably 10 to 25.

The multimodal ethylene terpolymer may be produced by polymerization using conditions which create a multimodal (e.g. bimodal) polymer product ideally using a Ziegler Natta catalyst system. Typically, a two or more stage, i.e. multistage, polymerization process is used with different process conditions in the different stages or zones (e.g. different temperatures, pressures, polymerization media, hydrogen partial pressures, etc). Preferably, the multimodal (e.g. bimodal) composition is produced by a multistage polymerization, e.g. using a series of reactors, with optional comonomer addition preferably in only the reactor(s) used for production of the higher/highest molecular weight component(s). A multistage process is defined to be a polymerization process in which a polymer comprising two or more fractions is produced by producing each or at least two polymer fraction(s) in a separate reaction stage, usually with different reaction conditions in each stage, in the presence of the reaction product of the previous stage, which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc. (see for example WO97/44371 and WO96/18662). Terpolymers meeting the requirements of the invention are known and can be bought from suppliers such as Borealis, e.g. FX1002.

It is preferred if the second multimodal ethylene terpolymer of the core layer is different to the multimodal LLDPE terpoylmer used in the seal layer.

In a preferred embodiment, the multimodal linear low density polyethylene terpolymer of the seal layer comprises a lower molecular weight (LMW) copolymer component and a higher molecular weight (HMW) copolymer component; and
the multimodal polyethylene terpolymer of the core layer comprises a lower molecular weight (LMW) homopolymer component and a higher molecular weight (HMW) terpolymer component.

### Outer Layer

The films of the invention comprise an outer layer. The outer layer is different than the seal layer. The outer layer is different than the core layer. In order for a film to have seal, core and outer layers which are distinguishable, the skilled person will appreciate that these are different.

The outer layer preferably comprises at least one low density polyethylene homopolymer (LDPE). Such as LDPE may have a density of 905 to 930 kg/m³. Such as LDPE may have a MFR₂ of 0.1 to 4.0 g/10min.

The LDPE preferably forms at least 30.0 wt% of the outer layer. Preferably at least 35.0 wt%, e.g. 35.0 to 50.0 wt%. The wt% of these components is relative to the total weight of the outer layer.

The outer layer may also comprise a multimodal polyethylene as hereinbefore defined for the core layer or seal layer. It may therefore comprises a first multimodal linear low density polyethylene terpolymer as defined for the seal layer or a second multimodal polyethylene terpolymer as defined for the core layer.

The outer layer may comprise a multimodal linear low density polyethylene (LLDPE) binary copolymer as defined for the core layer. It may also comprise a mixture of such polymers.

Preferably the outer layer comprises, in addition to the LDPE, a multimodal linear low density polyethylene (LLDPE) binary copolymer as defined for the core layer and either a second multimodal polyethylene terpolymer as defined for the core layer or a first multimodal linear low density polyethylene terpolymer as defined for the seal layer.

The outer layer may comprise at least 20.0 wt%, such as 20.0 to 45.0 wt% of the multimodal linear low density polyethylene (LLDPE) binary copolymer, such as 25.0 to 35.0 wt%.

The outer layer may comprise at least 20.0 wt%, such as 20.0 to 45.0 wt% of the second multimodal polyethylene terpolymer as defined for the core layer or the first multimodal linear low density polyethylene terpolymer as defined for the seal layer, such as 25.0 to 35.0 wt%.

In particular, the invention provides a multi-layered polyethylene film comprising at least an outer layer, a core layer, and a seal layer, in that order, wherein the seal layer comprises:
i) at least 30.0 wt% of a first multimodal linear low density polyethylene terpolymer; and
ii) at least 10.0 wt% of a first plastomer having a density of 910 kg/m³ or less;

wherein the core layer comprises:
   a) at least 8.0 wt% of second plastomer having a density of 910 kg/m³ or less, or
   b) at least 8.0 wt% of a multimodal linear low density polyethylene (LLDPE) binary copolymer;
      and
   c) at least 60.0 wt% of a second multimodal polyethylene terpolymer; and
wherein the outer layer comprises:
   I) at least 30.0 wt% of a low density polyethylene;
   II) at least 20.0 wt% of a multimodal linear low density polyethylene (LLDPE) binary copolymer; and
   III) at least 20.0 wt% of a first multimodal linear low density polyethylene terpolymer or a second multimodal polyethylene terpolymer.

### Multilayer Films

Films of the invention can be prepared using blown extrusion techniques that are well known in the art. An appropriate blend of the components required for each layer can be blended and coextruded. It will be appreciated that any layer of the film of the invention may also contain standard polymer additives if required.

The films of the invention may have a thickness of 20 to 120 µm, preferably 30 to 100 µm and more preferably 40 to 80 µm. Films of the invention are preferably not stretched in the machine or transverse or biaxial direction.

For the three-layer structure, the seal and outer layers and core layer may all be of equal thickness or alternatively the core layer may be thicker than outer and seal layers. A convenient film comprises outer/seal layers which each form 10.0 to 35.0%, preferably 15.0 to 30.0% of the total final thickness of the 3-layered film, the core layer forming the remaining thickness, e.g. 30.0 to 80.0%, preferably 40.0 to 70.0% of the total final thickness of the 3-layered film.

The total thickness of the film is 100%, thus the sum of the individual layers has to be 100%.

The inventive film structures offer sealability of a 100% polyethylene blown film without any further orientation-processing step at a very low temperature down to 57°C to achieve a seal strength of 5N/25mm with minimum compromise of stiffness and with good puncture resistance.

The seal initiation temperature of the films of the invention may fall in the range of 50 to 70°C, preferably 55 to 65°C.

The upper sealing limit is typically around 105 to 110°C. Thus, the sealing window of the films of the invention may be around 40 to 50°C, i.e. roughly from 55 to 105°C.

The hot tack temperature is preferably in the range of 50 to 65°C, preferably 50 to 60°C.

The hot tack strength is preferably 8.00 N/25 mm or more, such as 8.50 to 10 N/25 mm.

Prior arts disclose film structures with very low seal initiation temperature but those film structures are not 100% polyethylene and lowest sealing temperature was > 68°C to achieve 10N/25mm seal strength.

The inventive film structures also exhibit a 100% PE blown film with very high hot tack strength of > 9N/25mm at low sealing temperature of 66°C or higher. Such a high hot tack strength at such a low sealing temperature has not yet been claimed.

Films of the invention may have a tensile modulus of 250 to 400 MPa in the machine direction. The films of the invention may have a tensile modulus of 300 to 475 MPa in the transverse direction. Elongation at break values are also high.

Films of the invention are able to maintain high gloss and low haze. They have good dart drop and impact resistance as well as good puncture resistance.

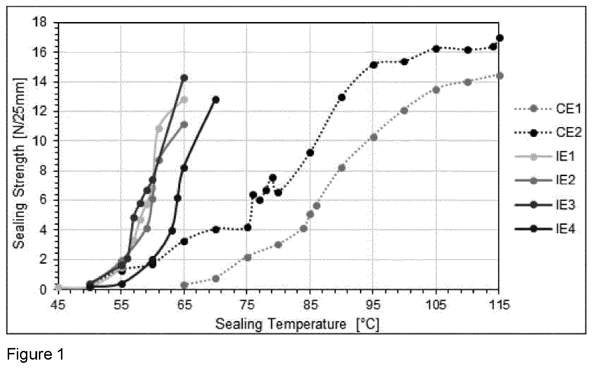

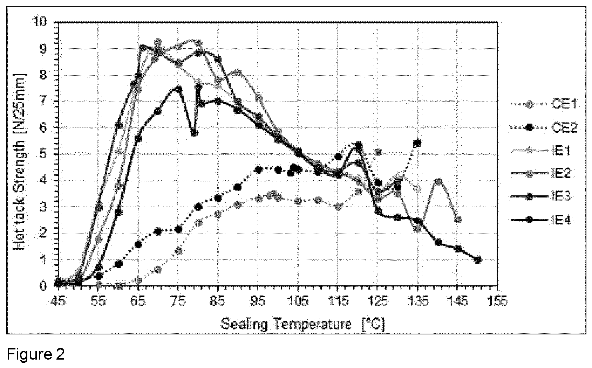

The invention will now be defined with reference to the following non limiting examples and figures. Figure 1 plots seal temperature vs seal strength for the films of the invention and the comparative films. Figure 2 plots seal temperature vs hot tack for the films of the invention and the comparative films.

### Determination methods

**Density** of the materials is measured according to ISO 1183:1987 (E), method D, with isopropanol-water as gradient liquid. The cooling rate of the plaques when crystallising the samples was 15 °C/min. Conditioning time was 16 hours.

### Melt Flow Rate (MFR) or Melt Index (MI)

The melt flow rate (MFR) is determined according to ISO 1133 and is indicated in g/10 min. The MFR is an indication of the melt viscosity of the polymer. The MFR is determined at 190°C for PE and at 230 °C for PP. The load under which the melt flow rate is determined is usually indicated as a subscript, for instance MFR₂ is measured under 2.16 kg load, MFR₅ is measured under 5 kg load or MFR₂₁ is measured under 21.6 kg load.

### Molecular weights, molecular weight distribution, Mn, Mw, MWD

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 x10⁻³ dL/g and a: 0.655 for PS, and K: 39 x10⁻³ dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

**Comonomer Content (%wt and %mol)** was determined by using ¹³C-NMR, as explained in WO2020/064534. The ¹³C-NMR spectra were recorded on Bruker 500 MHz spectrometer at 150 °C. Conversion between %wt and %mol can be carried out by calculation.

**Impact Strength** is determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail the weight is increased. At least 20 specimens are tested. The weight resulting in failure of 50% of the specimens is calculated and this provides the dart drop impact (DDI) value (g). The relative DDI (g/µm) is then calculated by dividing the DDI by the thickness of the film.

**Tensile modulus (secant modulus, 0.05-0.25%** ) **and elongation at break** are measured according to ISO 527-3 on film samples prepared as described under below "Film Sample preparation". The speed of testing is 200 mm/min. The test temperature is 23°C. Width of the film was 25 mm.

### Hot tack

Hot tack was measured according to ASTM F1921-12 / method B on J&B model 4000 MB, flat, NIPTEF ^{®} coated seal bar length of 50 mm, Seal bar width: 5 mm. Sealing time 1 s, cooling time 0,2 s, sealing pressure: 0,15 N/mm². Clamp separation rate: 200 mm/s, Sample width: 25 mm, Force range: 45 N;
Start of Energy calculation:2 [%]
End of Energy calculation: 20 [%]

**Gloss, clarity and haze** were determined according to ASTM D2457 (gloss) and ASTM D1003 (haze) on film samples with a thickness of 25 µm.

**Puncture resistance** was measured from film samples using the ISO 7765-2 method.

### Sealing initiation temperature (SIT); sealing end temperature (SET), sealing range:

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of ≥ 5 N is achieved. The upper limit (sealing end temperature (SET)) is reached, when the films stick to the sealing device.

The measurement was done according to the slightly modified ASTM F1921 - 12, where the test parameters sealing pressure, cooling time and test speed have been modified. The determination of the force/temperature curve was continued until thermal failure of the film.

The sealing range was determined on a J&B Universal Sealing Machine Type 4000 with a blown film of 40 µm thickness with the following further parameters:
Conditioning time: > 96 h
Specimen width: 25 mm
Sealing pressure: 0.4 N/mm² (PE)
Sealing time: 1 sec
Delay time: 30 sec
Sealing jaws dimension: 50x5 mm
Sealing jaws shape: flat
Sealing jaws coating: Niptef
Sealing temperature: ambient - 240°C
Sealing temperature interval: 5°C
Start temperature: 50°C
Grip separation rate: 42 mm/sec

### Examples:

Materials used:
**Queo^{™} 8201LA:** ethylene based octene plastomer, MFR(190/2.16) of 1.1 g/10 min, unimodal, density 883 kg/m³, produced in a solution polymerization process using a metallocene catalyst provided by Borealis AG). It contains processing stabilizers.
**Queo 0201FX:** ethylene based octene plastomer, MFR(190/2.16) of 1.1 g/10 min, unimodal, density 902 kg/m³, produced in a solution polymerization process using a metallocene catalyst (provided by Borealis AG). It contains contains 3000 ppm anti block agent and 1200 ppm slip agent, processing aid and stabilisers
**FX1002:** is a multimodal alpha-olefin terpolymer commercially available by Borealis AG, with a density of 937 kg/m³ (determined according to ISO 1183), a Melt Flow Rate (190°C/2.15 kg) of 0.4 g/10min and a Melt Flow Rate (190°C/21 kg) of 42 g/10min (according to ISO 1133).
**FX1001:** is a multimodal alpha-olefin terpolymer commercially available by Borealis AG, with density of 931 kg/m³ (determined according to ISO 1183), a Melt Flow Rate (190°C/2.15 kg) of 0.9 g/10min.
**Anteo^{™} FK1828:** bimodal ethylene/1-butene/1-hexene terpolymer with a density of 918 kg/m³ and an MFR₂ of 1.5 g/10min commercially available from Borouge.
**FB2230:** bimodal ethylene/1-butene copolymer with a density of 923 kg/m³ and an MFR2 of 0.2 g/10min commercially available from Borealis.
**FT5236:** low Density Polyethylene produced by Tubular Technology (provided by Borealis AG). FT5230 has MFR₂ of 0.75 g/10 min, density of 923 kg/m³.

### Film preparation

Three layer blown films were produced on a Dr. Colin 3-Layer Blown film line. The melt temperature of the sealing layer (A) was 180 to 200°C, the melt temperature of the core layer (B) was in the range of 190°C to 210°C and for the outer layer (C) 200°C. The throughput of the extruders was in sum 10 kg/h. The compositions used for the layers are indicated in the table 1.

Further parameters for the blown film line were:
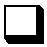 **Die Gap:** 1,5 mm
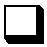 **Die Size:** 60mm
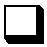 **BUR:** 1:3
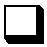 **Frost Line Height:** 120 mm

The formed films had a total thickness of 60 µm. Table 1 gives their properties:

**Table 1**

| | | | **Thickness** | | **Film structure and Composition, %** | | | | | |
|---|---|---|---|---|---|---|---|---|---|---|
| | | | | | CE1 | CE2 | IE1 | IE2 | IE3 | IE4 |
| Layer | Layer Distribution | Resin | µm | | | | | | | |
| outer layer | 20% | FT5236 | 12 | | **10** | | **40** | **40** | **40** | **40** |
| | | FK1828 | | | 90 | 20 | 30 | | | |
| | | FX1001 | | | | 80 | | | | |
| | | FX1002 | | | | | | 30 | 30 | 30 |
| | | FB2230 | | | | | 30 | 30 | 30 | 30 |
| core layer | 60% | FX1002 | 36 | | | | 85 | 85 | 70 | 70 |
| | | FX1001 | | | 80 | 80 | | | | |
| | | FK1828 | | | 20 | 20 | | | | |
| | | Queo 8201LA | | | | | 15 | 15 | 30 | |
| | | FB2230 | | | | | | | | 30 |
| seal layer | 20% | FB2230 | 12 | | | | 15 | | | 35 |
| | | FK1828 | | | 100 | 70 | 50 | 65 | 65 | 30 |
| | | Queo 8201LA | | | | | 35 | 35 | 35 | 35 |
| | | Queo 0201FX | | | | 30 | | | | |

| **Properties of films** | | | | | | | | | | |
|---|---|---|---|---|---|---|---|---|---|---|
| Properties | Description | Unit | | | CE1 | CE2 | IE1 | IE2 | IE3 | IE4 |
| SIT | 5N/25mm | °C | | | 85 | 76 | 58 | 60 | 57 | 64 |
| Hot Tack Temp. | 2N/25mm | °C | | | 77 | 68 | 53 | 56 | 53 | 58 |
| Max. hot tack | Strength | N/25mm | | | 3.53 | 4.53 | 9.05 | 9.28 | 9.06 | 7.57 |
| | Temperature | °C | | | 99 | 104 | 69 | 70 | 66 | 80 |
| Hot tack | End Temp. | °C | burn or break | | 145 | 135 | 125 | 130 | 125 | 125 |
| Sealing Range | hot tack | C | 5N/25mm | | - | - | 60-105 | 62-105 | 58-105 | 63-105 |
| DDI | ISO 7765-1 | g/60µm | | | 781 | 541 | 487 | 295 | 623 | 299 |
| Tensile modulus | ISO 527-3 | MPa | MD | | 375 | 366 | 320 | 331 | 291 | 361 |
| | ISO 527-3 | MPa | TD | | 500 | 476 | 373 | 362 | 324 | 442 |
| Elongation At Break | ISO 527-3 | % | MD | | 519 | 514 | 618 | 548 | 578 | 564 |
| | ISO 527-3 | % | TD | | 670 | 662 | 726 | 728 | 720 | 744 |
| Puncture resistance | ISO 7765-2 (4.4 m/s & - 20°C) | mm | Total penetration | | - | - | 15.2 | 15.2 | 15.5 | 15.7 |
| | | J/mm | norm. Energy @ total penetration | | - | - | 14.3 | 14.3 | 14.2 | 14.4 |
| Haze | ASTM D1003 | % | | | 14.52 | 51.82 | 12.45 | 12.9 | 11.85 | 12.3 |
| Gloss | ASTM D2457 | GU | 45° Inside | MD | - | 48.7 | 73.3 | 74.3 | 72.9 | 75.5 |
| | | GU | 45° Inside | TD | - | 49.2 | 74.1 | 74.1 | 73.1 | 75.2 |
| | | GU | 45° Outside | MD | - | - | 74.7 | 75.3 | 76.2 | 71.6 |
| | | GU | 45° Outside | TD | - | - | 75.8 | 75.1 | 77.6 | 72.7 |

The data demonstrates that the seal initiation temperature is reduced for the examples of the invention without loss of hot tack. In fact, for all examples, hot tack actually increases relative to the comparative examples. The data also demonstrates that tensile modulus, elongation at break, haze and gloss are not compromised using the films of the invention.

## Claims

1. A multi-layered polyethylene film comprising at least an outer layer, a core layer, and a seal layer, in that order, wherein the seal layer comprises:
i) at least 30.0 wt.% of a first multimodal linear low density polyethylene terpolymer, relative to the total weight of the seal layer; and
ii) at least 10.0 wt% of a first plastomer, relative to the total weight of the seal layer, having a density of 910 kg/m³ or less (ISO1183);
wherein the core layer comprises:
a) at least 8.0 wt% of second plastomer, relative to the total weight of the core layer, having a density of 910 kg/m³ or less (ISO 1183), or
b) at least 8.0 wt% of a multimodal linear low density polyethylene (LLDPE) binary copolymer relative to the total weight of the core layer;
and
c) a second multimodal polyethylene terpolymer.

2. A multi-layered polyethylene film as claimed in claim 1 wherein the multimodal linear low density polyethylene terpolymer of the seal layer comprises a lower molecular weight (LMW) copolymer component and a higher molecular weight (HMW) copolymer component;
wherein the LMW component is an ethylene copolymer of ethylene and one or more C4-C12 α-olefin(s), and wherein the HMW component is an ethylene copolymer of ethylene and one or more C4-C12 α-olefin(s) such that at least two C4-C12 α-olefin(s) are present.

3. A multi-layered polyethylene film as claimed in claim 1 wherein the multimodal polyethylene terpolymer of the core layer comprises a lower molecular weight (LMW) homopolymer component and a higher molecular weight (HMW) terpolymer component of ethylene and two or more C4-C12 α-olefin(s).

4. A multi-layered polyethylene film as claimed in any preceding claim wherein the first multimodal LLDPE terpolymer of the seal layer has a density of 910 to 930 kg/m³ (ISO1183).

5. A multi-layered polyethylene film as claimed in any preceding claim wherein the first multimodal LLDPE terpolymer of the seal layer has an Mw/Mn of 2.0 to 7.0, such as 2.0 to 6.0, ideally less than 5.0 (GPC).

6. A multi-layered polyethylene film as claimed in any preceding claim wherein the first multimodal LLDPE terpolymer of the sealing layer or the multimodal terpolymer of the core layer has an MFR₂ of 0.1 to 20 g/10min, preferably 0.35 to 5.0 g/10min, more preferably 0.4 to 3.0 g/10min (ISO1133 at 190°C, 2.16 kg).

7. A multi-layered polyethylene film as claimed in any preceding claim wherein the first multimodal LLDPE terpolymer of the seal layer is present in an amount of at least 35.0 wt%, such as at least 40.0 wt.%, preferably at least 50.0 wt.%, such as at least 60.0 wt.%, relative to the total weight of the seal layer.

8. A multi-layered polyethylene film as claimed in any preceding claim wherein the second multimodal polyethylene terpolymer of the core layer has a density of 920 to 940 kg/m³ (ISO1183) and/or wherein the second multimodal polyethylene terpolymer of the core layer has an Mw/Mn of 10 to 30, preferably 10 to 25 (GPC).

9. A multi-layered polyethylene film as claimed in any preceding claim wherein the first and second plastomers are independently a copolymer of ethylene and 1-octene.

10. A multi-layered polyethylene film as claimed in any preceding claim wherein the first plastomer is present in an amount of 15.0 to 45.0 wt.%, such as 20.0 to 40.0 wt.%, especially 25.0 to 40.0 wt% of the total weight of the seal layer.

11. A multi-layered polyethylene film as claimed in any preceding claim wherein the second plastomer or the multimodal LLDPE binary copolymer is present in an amount of at least 10.0 wt.%, preferably 10.0 to 40.0 wt.%, such as 12.0 to 40.0 wt.%, relative to the total weight of the core layer.

12. A multi-layered polyethylene film as claimed in any preceding claim wherein the second multimodal polyethylene terpolymer of the core layer is present in an amount of at least 50.0 wt.%, preferably at least 60.0 wt.%, such as at least 70.0 wt.%, relative to the total weight of the core layer.

13. A multi-layered polyethylene film as claimed in any preceding claim wherein the outer layer comprises a blend of a multimodal polyethylene and a LDPE, such as a blend of an LDPE, a multimodal LLDPE binary copolymer and either a first multimodal LLDPE terpolymer or second multimodal polyethylene terpolymer.

14. A multi-layered polyethylene film as claimed in any preceding claim having a seal initiation temperature (measured at 5 N/25mm) of 70°C or less, preferably 65°C or less (ASTM F1921-12); and/or
a maximum hot tack strength of greater than 9N/25mm at a temperature of 65°C or above (ASTM F1921-12 / method B).

15. A process for the preparation of a multi-layered polyethylene film as claimed in any of claims 1 to 14 comprising the steps of:
i) forming a first polymer composition comprising at least 30.0 wt.% of a first multimodal linear low density polyethylene terpolymer; and
ii) at least 10.0 wt% of a first plastomer having a density of 910 kg/m³ or less (ISO1183);
forming a second polymer composition comprising:
a) at least 8.0 wt% of second plastomer having a density of 910 kg/m³ or less (ISO1183); or
b) at least 8.0 wt% of a multimodal linear low density polyethylene (LLDPE) binary copolymer;
and
c) a second multimodal polyethylene terpolymer;
forming a third polymer composition; and
(co)extruding the first, second and third polymer compositions to form said seal layer, core layer and outer layer respectively.

## Patentansprüche

1. Mehrschichtige Polyethylenfolie, umfassend mindestens eine Außenschicht, eine Kernschicht und eine Siegelschicht, in dieser Reihenfolge, wobei die Siegelschicht umfasst:
i) mindestens 30,0 Gew.-% eines ersten Terpolymers mit multimodalem linearem Polyethylen niedriger Dichte, bezogen auf das Gesamtgewicht der Siegelschicht; und
ii) mindestens 10,0 Gew.-% eines ersten Plastomers, bezogen auf das Gesamtgewicht der Siegelschicht, mit einer Dichte von 910 kg/m³ oder weniger (ISO 1183);
wobei die Kernschicht umfasst:
a) mindestens 8,0 Gew.-% eines zweiten Plastomers, bezogen auf das Gesamtgewicht der Kernschicht, mit einer Dichte von 910 kg/m³ oder weniger (ISO 1183), oder
b) mindestens 8,0 Gew.-% eines multimodalen linearen Polyethylens niedriger Dichte (LLDPE)-Binärcopolymers, bezogen auf das Gesamtgewicht der Kernschicht; und
c) ein zweites multimodales Polyethylen-Terpolymer.

2. Mehrschichtige Polyethylenfolie nach Anspruch 1, wobei das Terpolymer mit multimodalem linearem Polyethylen niedriger Dichte der Siegelschicht eine Copolymerkomponente mit niedrigerem Molekulargewicht (LMW) und eine Copolymerkomponente mit höherem Molekulargewicht (HMW) umfasst;
wobei die LMW-Komponente ein Ethylencopolymer aus Ethylen und einem oder mehreren C4-C12-α-Olefin(en) ist, und wobei die HMW-Komponente ein Ethylencopolymer aus Ethylen und einem oder mehreren C4-C12-α-Olefin(en) ist, sodass mindestens zwei C4-C12-α-Olefin(e) vorhanden sind.

3. Mehrschichtige Polyethylenfolie nach Anspruch 1, wobei das multimodale Polyethylen-Terpolymer der Kernschicht eine Homopolymerkomponente mit niedrigerem Molekulargewicht (LMW) und eine Terpolymerkomponente mit höherem Molekulargewicht (HMW) aus Ethylen und zwei oder mehr C4-C12-α-Olefin(en) umfasst.

4. Mehrschichtige Polyethylenfolie nach einem vorstehenden Anspruch, wobei das erste multimodale LLDPE-Terpolymer der Siegelschicht eine Dichte von 910 bis 930 kg/m³ (ISO 1183) aufweist.

5. Mehrschichtige Polyethylenfolie nach einem vorstehenden Anspruch, wobei das erste multimodale LLDPE-Terpolymer der Siegelschicht ein Mw/Mn von 2,0 bis 7,0, wie etwa 2,0 bis 6,0, idealerweise weniger als 5,0 (GPC) aufweist.

6. Mehrschichtige Polyethylenfolie nach einem vorstehenden Anspruch, wobei das erste multimodale LLDPE-Terpolymer der Siegelschicht oder das multimodale Terpolymer der Kernschicht ein MFR2 von 0,1 bis 20 g/10 min, bevorzugt 0,35 bis 5,0 g/10 min, stärker bevorzugt 0,4 bis 3,0 g/10 min (ISO 1133 bei 190 °C, 2,16 kg) aufweist.

7. Mehrschichtige Polyethylenfolie nach einem vorstehenden Anspruch, wobei das erste multimodale LLDPE-Terpolymer der Siegelschicht in einer Menge von mindestens 35,0 Gew.-%, wie etwa mindestens 40,0 Gew.-%, bevorzugt mindestens 50,0 Gew.-%, wie etwa mindestens 60,0 Gew.-%, bezogen auf das Gesamtgewicht der Siegelschicht, vorhanden ist.

8. Mehrschichtige Polyethylenfolie nach einem vorstehenden Anspruch, wobei das zweite multimodale Polyethylen-Terpolymer der Kernschicht eine Dichte von 920 bis 940 kg/m³ (ISO 1183) aufweist und/oder wobei das zweite multimodale Polyethylen-Terpolymer der Kernschicht ein Mw/Mn von 10 bis 30, bevorzugt 10 bis 25 (GPC) aufweist.

9. Mehrschichtige Polyethylenfolie nach einem vorstehenden Anspruch, wobei das erste und das zweite Plastomer unabhängig voneinander ein Copolymer aus Ethylen und 1-Octen sind.

10. Mehrschichtige Polyethylenfolie nach einem vorstehenden Anspruch, wobei das erste Plastomer in einer Menge von 15,0 bis 45,0 Gew.-%, wie etwa 20,0 bis 40,0 Gew.-%, insbesondere 25,0 bis 40,0 Gew.-% des Gesamtgewichts der Siegelschicht, vorhanden ist.

11. Mehrschichtige Polyethylenfolie nach einem vorstehenden Anspruch, wobei das zweite Plastomer oder das multimodale LLDPE-Binärcopolymer in einer Menge von mindestens 10,0 Gew.-%, bevorzugt 10,0 bis 40,0 Gew.-%, wie etwa 12,0 bis 40,0 Gew.-%, bezogen auf das Gesamtgewicht der Kernschicht, vorhanden ist.

12. Mehrschichtige Polyethylenfolie nach einem vorstehenden Anspruch, wobei das zweite multimodale Polyethylen-Terpolymer der Kernschicht in einer Menge von mindestens 50,0 Gew.-%, bevorzugt mindestens 60,0 Gew.-%, wie etwa mindestens 70,0 Gew.-%, bezogen auf das Gesamtgewicht der Kernschicht, vorhanden ist.

13. Mehrschichtige Polyethylenfolie nach einem vorstehenden Anspruch, wobei die Außenschicht einen Blend aus einem multimodalen Polyethylen und einem LDPE umfasst, wie etwa einen Blend aus einem LDPE, einem multimodalen LLDPE-Binärcopolymer und entweder einem ersten multimodalen LLDPE-Terpolymer oder einem zweiten multimodalen Polyethylen-Terpolymer.

14. Mehrschichtige Polyethylenfolie nach einem vorstehenden Anspruch, mit einer Siegelanlauftemperatur (gemessen bei 5 N/25 mm) von 70 °C oder weniger, bevorzugt 65 °C oder weniger (ASTM F1921-12); und/oder
einer maximalen Hot-Tack-Festigkeit von größer als 9 N/25 mm bei einer Temperatur von 65 °C oder höher (ASTM F1921-12 /Verfahren B).

15. Verfahren zur Herstellung einer mehrschichtigen Polyethylenfolie nach einem der Ansprüche 1 bis 14, umfassend die folgenden Schritte:
i) Bildung einer ersten Polymerzusammensetzung, umfassend mindestens 30,0 Gew.-% eines ersten Terpolymers mit multimodalem linearem Polyethylen niedriger Dichte; und
ii) mindestens 10,0 Gew.-% eines ersten Plastomers mit einer Dichte von 910 kg/m³ oder weniger (ISO 1183);
Bildung einer zweiten Polymerzusammensetzung, umfassend:
a) mindestens 8,0 Gew.-% eines zweiten Plastomers mit einer Dichte von 910 kg/m³ oder weniger (ISO 1183); oder
b) mindestens 8,0 Gew.-% eines multimodalen linearen Polyethylens niedriger Dichte (LLDPE)-Binärcopolymers; und
c) ein zweites multimodales Polyethylen-Terpolymer;
Bildung einer dritten Polymerzusammensetzung; und
(co-)extrudieren der ersten, zweiten und dritten Polymerzusammensetzungen zur Bildung der Siegelschicht, der Kernschicht bzw. der Außenschicht jeweils.

## Revendications

1. Film de polyéthylène multicouche comprenant au moins une couche externe, une couche centrale et une couche de scellage, dans cet ordre, dans lequel la couche de scellage comprend :
i) au moins 30,0 % en poids d'un premier terpolymère multimodal de polyéthylène linéaire de faible densité, par rapport au poids total de la couche de scellage ; et
ii) au moins 10,0 % en poids d'un premier plastomère, par rapport au poids total de la couche de scellage, présentant une densité de 910 kg/m³ ou moins (ISO 1183) ;
dans lequel la couche centrale comprend :
a) au moins 8,0 % en poids d'un deuxième plastomère, par rapport au poids total de la couche centrale, présentant une densité de 910 kg/m³ ou moins (ISO 1183), ou
b) au moins 8,0 % en poids d'un copolymère binaire multimodal de polyéthylène linéaire de faible densité (LLDPE) par rapport au poids total de la couche centrale ; et
c) un deuxième terpolymère multimodal de polyéthylène.

2. Film de polyéthylène multicouche selon la revendication 1 dans lequel le terpolymère multimodal de polyéthylène linéaire de faible densité de la couche de scellage comprend un composant copolymère de plus faible poids moléculaire (LMW) et un composant copolymère de poids moléculaire plus élevé (HMW) ;
dans lequel le composant LMW est un copolymère d'éthylène et d'une ou plusieurs α-oléfine(s) en C4-C12, et dans lequel le composant HMW est un copolymère d'éthylène et d'une ou plusieurs α-oléfine(s) en C4-C12 de telle sorte qu'au moins deux α-oléfine(s) en C4-C12 sont présentes.

3. Film de polyéthylène multicouche selon la revendication 1 dans lequel le terpolymère multimodal de polyéthylène de la couche centrale comprend un composant homopolymère de plus faible poids moléculaire (LMW) et un composant terpolymère de poids moléculaire plus élevé (HMW) d'éthylène et de deux ou plus α-oléfine(s) en C4-C12.

4. Film de polyéthylène multicouche selon l'une quelconque des revendications précédentes dans lequel le premier terpolymère multimodal de LLDPE de la couche de scellage présente une densité de 910 à 930 kg/m³ (ISO 1183).

5. Film de polyéthylène multicouche selon l'une quelconque des revendications précédentes dans lequel le premier terpolymère multimodal de LLDPE de la couche de scellage présente un Mw/Mn de 2,0 à 7,0, tel que 2,0 à 6,0, idéalement inférieur à 5,0 (GPC).

6. Film de polyéthylène multicouche selon l'une quelconque des revendications précédentes dans lequel le premier terpolymère multimodal de LLDPE de la couche de scellage ou le terpolymère multimodal de la couche centrale présente un MFR2 de 0,1 à 20 g/10 min, de préférence 0,35 à 5,0 g/10 min, davantage de préférence 0,4 à 3,0 g/10 min (ISO1133 à 190 °C, 2,16 kg).

7. Film de polyéthylène multicouche selon l'une quelconque des revendications précédentes dans lequel le premier terpolymère multimodal de LLDPE de la couche de scellage est présent en une quantité d'au moins 35,0 % en poids, telle qu'au moins 40,0 % en poids, de préférence au moins 50,0 % en poids, telle qu'au moins 60,0 % en poids, par rapport au poids total de la couche de scellage.

8. Film de polyéthylène multicouche selon l'une quelconque des revendications précédentes dans lequel le deuxième terpolymère multimodal de polyéthylène de la couche centrale présente une densité de 920 à 940 kg/m³ (ISO 1183) et/ou dans lequel le deuxième terpolymère multimodal de polyéthylène de la couche centrale présente un Mw/Mn de 10 à 30, de préférence 10 à 25 (GPC).

9. Film de polyéthylène multicouche selon l'une quelconque des revendications précédentes dans lequel les premier et deuxième plastomères sont indépendamment un copolymère d'éthylène et de 1-octène.

10. Film de polyéthylène multicouche selon l'une quelconque des revendications précédentes dans lequel le premier plastomère est présent en une quantité de 15,0 à 45,0 % en poids, telle que 20,0 à 40,0 % en poids, en particulier 25,0 à 40,0 % en poids du poids total de la couche de scellage.

11. Film de polyéthylène multicouche selon l'une quelconque des revendications précédentes dans lequel le deuxième plastomère ou le copolymère binaire multimodal de LLDPE est présent en une quantité d'au moins 10,0 % en poids, de préférence 10,0 à 40,0 % en poids, telle que 12,0 à 40,0 % en poids, par rapport au poids total de la couche centrale.

12. Film de polyéthylène multicouche selon l'une quelconque des revendications précédentes dans lequel le deuxième terpolymère multimodal de polyéthylène de la couche centrale est présent en une quantité d'au moins 50,0 % en poids, de préférence au moins 60,0 % en poids, telle qu'au moins 70,0 % en poids, par rapport au poids total de la couche centrale.

13. Film de polyéthylène multicouche selon l'une quelconque des revendications précédentes dans lequel la couche externe comprend un mélange d'un polyéthylène multimodal et d'un LDPE, tel qu'un mélange d'un LDPE, d'un copolymère binaire multimodal de LLDPE et soit d'un premier terpolymère multimodal de LLDPE soit d'un deuxième terpolymère multimodal de polyéthylène.

14. Film de polyéthylène multicouche selon l'une quelconque des revendications précédentes présentant une température d'amorçage de scellage (mesurée à 5 N/25mm) de 70 °C ou moins, de préférence 65 °C ou moins (ASTM F1921-12) ; et/ou
une force d'adhérence à chaud maximale de plus de 9N/25mm à une température de 65 °C ou plus (ASTM F1921-12 /procédé B).

15. Procédé de préparation d'un film de polyéthylène multicouche selon l'une quelconque des revendications 1 à 14, comprenant les étapes consistant à :
i) former une première composition polymérique comprenant au moins 30,0 % en poids d'un premier terpolymère multimodal de polyéthylène linéaire de faible densité ; et
ii) au moins 10,0 % en poids d'un premier plastomère présentant une densité de 910 kg/m³ ou moins (ISO 1183) ;
former une deuxième composition polymérique comprenant :
a) au moins 8,0 % en poids d'un deuxième plastomère présentant une densité de 910 kg/m³ ou moins (ISO1183) ; ou
b) au moins 8,0 % en poids d'un copolymère binaire multimodal de polyéthylène linéaire de faible densité (LLDPE) ; et
c) un deuxième terpolymère multimodal de polyéthylène ;
former une troisième composition polymérique ; et
(co)extruder les première, deuxième et troisième compositions polymériques pour former lesdites couche de scellage, couche centrale et couche externe respectivement.
